(19) **Europäisches Patentamt**
**European Patent Office**
**Office européen des brevets**

(11) **EP 1 004 354 B2**

(12) **NOUVEAU FASCICULE DE BREVET EUROPEEN**

(45) Date de publication et mention de la décision concernant l'opposition:
**18.07.2007   Bulletin 2007/29**

(45) Mention de la délivrance du brevet:
**21.07.2004   Bulletin 2004/30**

(21) Numéro de dépôt: **99402933.8**

(22) Date de dépôt: **25.11.1999**

(51) Int Cl.:
**B01F 17/00** <sup>(2006.01)</sup>

(54) **Composition de polyols concentré**

Konzentrierte Zusammensetzung aus Polyolen

Concentrated composition of polyols

(84) Etats contractants désignés:
**AT BE CH CY DE DK ES FI FR GB GR IE IT LI LU MC NL PT SE**

(30) Priorité: **27.11.1998   FR 9814962**

(43) Date de publication de la demande:
**31.05.2000   Bulletin 2000/22**

(73) Titulaire: **Roquette Frères**
**62136 Lestrem (FR)**

(72) Inventeurs:
• **Lefevre, Philippe**
**59400 Merville (FR)**
• **Duriez, Xavier**
**59270 Saint Jans Cappel (FR)**

• **Harris, L. Scott**
**Hamilton,**
**Illinois 62431 (US)**
• **Steffensmeier, Gina A.**
**Salem,**
**Iowa 52649 (US)**

(74) Mandataire: **Touati, Catherine**
**Cabinet Plasseraud**
**52 rue de la Victoire**
**75440 Paris Cedex 09 (FR)**

(56) Documents cités:

| | |
|---|---|
| **EP-A- 0 431 995** | **EP-A- 0 561 089** |
| **EP-A- 0 711 743** | **WO-A-95/30338** |
| **WO-A-97/01962** | **WO-A-97/48372** |
| **US-A- 4 357 313** | **US-A- 5 773 604** |

EP 1 004 354 B2

**Description**

La présente invention concerne une composition de polyols concentrée.

Elle a trait également à son utilisation pour la dispersion des hydrocolloides tels que la cellulose et ses dérivés ainsi que pour la préparation de produits pharmaceutiques ou cosmétologiques, comme notamment les pâtes dentifrices.

Les pâtes dentifrices contiennent généralement un abrasif, un humectant, de l'eau et un agent gélifiant utilisé pour conférer une consistance crémeuse ou de type gel, et pour former un support pour tous les autres ingrédients présents dans les pâtes dentifrices, tels que les arômes, les édulcorants, les conservateurs.

La fonction principale de l'humectant est de maintenir une certaine humidité dans la pâte dentifrice lorsqu'elle est exposée à l'air libre de façon à éviter le durcissement de celle-ci et la formation de bouchons au niveau de l'orifice des tubes de dentifrice.

Les humectants utilisés le plus souvent sont la glycérine et le sorbitol en solutions aqueuses, seuls ou en mélanges. Le xylitol est parfois utilisé mais son procédé d'obtention étant plus complexe, il reste un produit plus coûteux.

C'est pourquoi, pour des raisons économiques, on préfère utiliser le sorbitol, que l'on trouve sur le marché sous forme de sirops à 70% de matière sèche.

D'une façon générale, on l'utilise dans des proportions d'environ 20 à 70% du poids de la pâte dentifrice. Il est d'autre part souhaitable que le sorbitol soit non-cristallisable, afin d'assurer une stabilité de celui-ci avant utilisation et une stabilité des pâtes dentifrices au stockage.

En ce qui concerne les agents gélifiants, on utilise généralement des hydrocolloïdes tels que gomme guar, dérivés de guar, gomme arabique, carraghénanes, xanthanes, méthylcellulose, carboxyméthyl cellulose, hydroxyéthylcellulose. On les utilise dans des proportions de 0,1 à 5 % en poids, selon que l'on désire une pâte ou un gel.

La carboxyméthyl cellulose sodique, plus communément appelée CMC, est l'agent gélifiant le plus utilisé dans les pâtes dentifrices.

Lors de la préparation de pâtes dentifrices à base de sirop de sorbitol non-cristallisable à 70% de matière sèche, l'agent gélifiant est préalablement dispersé dans le sirop de sorbitol. Cette étape est particulièrement critique puisque, bien qu'hydrophile, l'agent gélifiant a tendance à former des grumeaux et à s'agglomérer. Dans certains cas, l'eau pénètre très lentement ces grumeaux, et une dispersion complète de l'agent gélifiant n'est atteinte qu'au bout d'un temps considérable.

Certains fabricants contournent ce problème en s'équipant de mélangeurs à très haut cisaillement, mais ce matériel reste très coûteux.

Ceci n'est pas le cas lorsque l'on choisit la glycérine en tant qu'humectant.

En effet, l'agent gélifiant se disperse correctement dans la glycérine, qui est anhydre et ne provoque donc pas la solubilisation de celui-ci. Dès que de l'eau est ajoutée à la formulation, l'agent gélifiant gonfle et se disperse de façon homogène pour former un gel épais. C'est le principal avantage de la glycérine face au sorbitol.

Cependant, de nombreux fabricants cherchent à réduire au maximum leur utilisation de glycérine, en raison de son coût élevé et fluctuant, mais aussi en raison de ses faibles performances organoleptiques.

Il subsiste cependant, comme décrit ci-avant, un problème à résoudre pour les formulateurs de pâte dentifrice cherchant à privilégier l'emploi de sorbitol, en substitution de la glycérine.

Une solution a été proposée dans le brevet WO. 97.48372, consistant à pulvériser des solutions de polyols sur des particules d'hydrocolloïdes, puis à sécher les granules ainsi obtenus sur lit fluidisé. Les particules de polymère peuvent ensuite être incorporées à la préparation pour pâte dentifrice sans formation de grumeaux. Il n'en reste pas moins que cette étape supplémentaire de préparation de l'agent gélifiant complique encore la formulation des pâtes dentifrices, et est économiquement inacceptable.

Une autre solution, proposée dans le brevet US 4.883.537 consiste en la dispersion d'hydrocolloïde dans l'eau, en présence d'une quantité non négligeable de carbonate de potassium. On en déduit facilement que cette solution n'est pas compatible avec une utilisation en pâte dentifrice, en raison d'une part de l'alcalinité importante du carbonate de potassium, et d'autre part de l'apport en eau qui est imposé au fabricant.

Pour remédier aux problèmes d'agglomération des agents gélifiants, on pouvait penser qu'il suffisait donc de diminuer au maximum la teneur en eau des sirops de sorbitol, puisque l'on savait d'une part, que lorsque celle-ci était trop élevée, des grumeaux apparaissaient, extrêmement difficiles à éliminer et d'autre part, que lorsque la teneur en eau du milieu dispersant était suffisamment faible, il n'y avait pas d'hydratation ni de gonflement anticipé de l'agent gélifiant, et donc pas d'apparition de grumeaux.

Or les sirops de sorbitol qui sont utilisés préférentiellement comme humectants peuvent présenter des difficultés de concentration au-dessus d'une matière sèche de l'ordre de 80%. En effet, lorsque l'on évapore l'eau contenue dans de tels sirops, ils deviennent extrêmement visqueux. Dans ces conditions, il est nécessaire d'avoir recours à des équipements sophistiqués et donc coûteux. De plus, ces produits très visqueux ont l'inconvénient majeur de ne plus être pompables, ce qui les rend inadaptés pour toute utilisation industrielle, en particulier vis à vis du transport, du stockage et de la mise en oeuvre de ces sirops.

Il a été proposé dans les brevets US 3.651.936, 4.728.515, 4.671.961, 4. 671.967, d'avoir recours pour la préparation de produits alimentaires tels que les chewing gums, à des compositions concentrées à base de sirops d'hydrolysats d'amidon et de glycérine ou de propylène glycol, coévaporés.

En effet, la glycérine et le propylène glycol abaissent la viscosité des sirops d'hydrolysats d'amidon et facilitent l'évaporation de l'eau que ces derniers contiennent. Ces compositions concentrées présentent une teneur en eau relativement basse, pour une teneur en glycérine d'au moins 25% en poids. Or la glycérine, outre l'inconvénient de son coût, présente par nature une saveur astringente et désagréable qui nuit généralement aux qualités organoleptiques du produit final. De même, dans le brevet WO 95.04107, il a été proposé de solubiliser des polysaccharides dans un mélange de sorbitol et de glycérine. Or, la présence de sorbitol en fortes proportions laisse présager des risques de cristallisation au cours du stockage. De plus, le polysaccharide étant présent en faibles proportions (0,1 %), cette solution n'est pas transposable à la préparation de pâtes dentifrices qui contiennent généralement de 1 à 5 % d'agent gélifiant.

L'invention a donc pour but de remédier aux inconvénients de l'art antérieur et de fournir une composition de polyols concentrée contenant du sorbitol, répondant mieux que celles qui existent déjà aux diverses exigences de la pratique, c'est à dire :

- possédant une bonne aptitude à disperser les agents gélifiants sans formation de grumeaux, et sans faire obligatoirement appel à des équipements sophistiqués,
- présentant des propriétés rhéologiques telles qu'elle soit aisée à manipuler et transporter,
- étant de préparation aisée et économique,
- étant utilisable dans les produits pharmaceutiques ou cosmétiques, notamment dans les pâtes dentifrices,
- étant stable en elle-même et apte à conférer aux produits auxquels elle est incorporée une stabilité suffisante à la conservation, notamment en rapport avec les phénomènes de cristallisation au cours du stockage.

Et la Demanderesse a eu le mérite de trouver, à l'issue de recherches approfondies, que ce but pouvait être atteint dès lors que la composition de polyols concentrée présente une teneur en eau sélectionnée et un profil glucidique particulier.

La Demanderesse a en effet remarqué que de manière surprenante et inattendue, il apparaissait, aux matières sèches élevées, un nouveau phénomène lors de la dispersion des agents gélifiants : dans un premier temps, l'agent gélifiant se disperse facilement comme prévu, mais dans un second temps, il absorbe l'eau présente. Ce qui équivaut à une augmentation très importante de la matière sèche du milieu avec pour conséquence une cristallisation des polyols qui se traduit par une prise en masse de l'ensemble du mélange.

Ainsi, de manière inattendue, et comme il sera exemplifié par ailleurs, seul un intervalle précis de teneurs en eau de la composition de polyols permet en fait de disperser convenablement un agent gélifiant.

Il convient de se placer entre 12 et 16% d'eau, pour éviter au mieux les problèmes cités précédemment.

Il était déjà connu, dans le brevet AU 642.177, dont la Demanderesse est titulaire, de concentrer des sirops de maltitol et de xylitol jusqu'à des teneurs en eau de 7 à 10 %. Or, la teneur élevée en disaccharides hydrogénés de ces sirops, destinés à des usages alimentaires, entraîne une importante viscosité de ceux-ci. D'autre part, ces sirops ne contiennent pratiquement pas de sorbitol et ne répondent pas forcément aux exigences économiques et fonctionnelles des fabricants de préparations pharmaceutiques ou cosmétologiques, et notamment aux fabricants de pâtes dentifrices.

D'autres sirops de maltitol concentrés ont également été décrits dans le brevet EP 0.072.080 pour la préparation de gels, mettant en oeuvre de très faibles quantités de carboxyméthyl cellulose.

Ces sirops, très riches en molécules de degré de polymérisation de 2 et plus, sont très visqueux. On sait en effet que la viscosité est corrélée au poids moléculaire des polyols contenus dans ces sirops.

On connaît également des compositions visqueuses de xylitol, décrites dans le brevet US 5.728.225, dont la Demanderesse est également titulaire. Ces compositions, dépourvues de sorbitol, ont une viscosité inadaptée.

Le problème qui se pose donc, en vue de concentrer des sirops de sorbitol, concerne la stabilité et la pompabilité des compositions résultantes, dont la matière sèche est adaptée à la dispersibilité satisfaisante des agents gélifiants, ces trois critères n'ayant jamais été réunis dans l'art antérieur.

La Demanderesse a alors démontré que les critères de stabilité et de pompabilité pouvaient être remplis dès lors que les compositions de polyols, de matière sèche adaptée au critère de dispersibilité, présentaient un profil glucidique très particulier.

L'invention se rapporte donc en premier lieu à une composition de polyols concentrée, caractérisée en ce que sa teneur en eau est comprise entre 12 et 16%, et en ce qu'elle comprend :

- de 35 à 90% de monosaccharides hydrogénés dont au moins 30% de sorbitol,
- de 0 à 45% de disaccharides hydrogénés, ces pourcentages étant exprimés en poids sec par rapport au poids sec de l'ensemble des saccharides contenus dans la dite composition.

De façon préférée, cette composition présente une teneur en monosaccharides hydrogénés comprise entre 40 et 90% dont au moins 35% de sorbitol et une teneur en disaccharides hydrogénés comprise entre 0 et 35%.

De façon encore plus préférentielle, elle présente une teneur en monosaccharides hydrogénés comprise entre 60 et 90% dont au moins 50% de sorbitol et une teneur en disaccharides hydrogénés comprise entre 2 et 35%.

La Demanderesse a en effet démontré, au cours de longs travaux de recherche, qu'en sélectionnant cette gamme particulière de teneurs en eau, associée à ce profil glucidique particulier, on obtenait des compositions de polyols selon l'invention, qui conviennent parfaitement pour la dispersion aisée d'hydrocolloïdes.

Par « monosaccharide hydrogéné » au sens de la présente invention, on entend un produit choisi de préférence dans le groupe comprenant le sorbitol, le mannitol, le xylitol, l'arabitol, l'iditol, le ribitol et leurs mélanges.

De préférence, le monosaccharide hydrogéné est choisi parmi le sorbitol, le mannitol et les mélanges quelconques de ceux-ci.

Par « disaccharide hydrogéné », on entend un produit choisi de préférence dans le groupe comprenant le maltitol, le lactitol, le glucosido 1-6 mannitol, l'isomaltitol, le cellobiitol et les mélanges quelconques de ceux-ci.

De préférence, le disaccharide hydrogéné est constitué de maltitol. La composition selon l'invention peut en outre contenir d'autres saccharides hydrogénés, comme notamment les oligo et polysaccharides hydrogénés. En particulier, des teneurs de 10 à 19 % en poids de polysaccharides dont le degré de polymérisation est supérieur ou égal à 3 conviennent parfaitement.

Cette composition peut également comprendre, outre les saccharides hydrogénés tels que décrits, des additifs traditionnels pour produits pharmaceutiques ou cosmétiques, tels que, par exemple, des matériaux de polissage, des agents épaississants, des agents tensioactifs, des composés fluorés, des arômes, des édulcorants, des colorants ou blanchissants, des conservateurs, des silicones.

Selon un mode de réalisation avantageux de la composition conforme à l'invention, celle-ci présente une viscosité, mesurée à 45°C, inférieure à 10000 mPa.s, de préférence inférieure à 5 000 mPa.s, et plus préférentiellement encore comprise entre 500 et 4 500 mPa.s.

En effet, seules les compositions présentant de telles viscosités peuvent généralement être considérées comme pompables, sans problème de surchauffe au niveau des pompes industrielles.

En ce qui concerne la mesure de viscosité, celle-ci est effectuée au moyen d'un rhéomètre de type ARES commercialisé par la société RHEOMETRIC SCIENTIFIC (US).

Ce rhéomètre est équipé d'un système de mesure de type cône-plateau et d'un système thermostatique.

Les solutions à tester sont déposées sur un plateau mobile thermostaté. On mesure la résistance au cisaillement du produit entre le cône et le plateau en rotation à une température donnée.

Les résultats sont exprimés en mPa.s.

Il est important d'exprimer chaque fois la viscosité en fonction de la température à laquelle elle a été mesurée, étant donné qu'elle en est directement dépendante.

Selon une autre variante, la composition conforme à l'invention se présente à une température supérieure à 20°C, de préférence comprise entre 30 et 55°C. Cette caractéristique permet non seulement de répondre aux trois propriétés recherchées, c'est-à-dire stabilité, pompabilité adaptée et facilité de dispersion d'agents gélifiants, mais elle est également particulièrement avantageuse pour les utilisateurs et notamment les fabricants de pâtes dentifrices qui effectuent leurs préparations à chaud. En effet, la livraison d'une composition de polyols chaude permet aux utilisateurs de s'affranchir d'une étape supplémentaire de chauffage.

Ainsi, la composition conforme à l'invention, à une température comprise entre 30 et 55°C, est particulièrement avantageuse.

Pour préparer la composition conforme à l'invention, on peut préparer un sirop à partir de polyols particuliers à l'état de poudre ou liquides ou hydrogéner des compositions de saccharides particulières, puis évaporer l'eau contenue dans les compositions ainsi préparées jusqu'à atteindre une teneur en eau comprise entre 12 et 16 % en poids. Cette étape d'évaporation peut être effectuée à l'aide de dispositifs conventionnels parmi lesquels on peut citer ceux commercialisés sous la marque « PARAVAP » par la Société APV Equipment Incorporated of Tonowanda N.Y.

On peut préparer une composition conforme à l'invention présentant en outre une très faible teneur en sucres réducteurs, stable aux alcalis, ce qui permettra de l'utiliser notamment dans des pâtes dentifrices contenant des composés basiques.

Cette composition, communément qualifiée de « désucrée » par l'homme de l'art, présente un taux de sucres réducteurs généralement inférieur à 1000 ppm, et préférentiellement inférieur à 500 ppm.

Selon un autre mode de réalisation, la composition conforme à l'invention peut contenir de la glycérine en faibles proportions, à savoir au plus égales à 24 % en poids de ladite composition, de manière à améliorer encore si nécessaire la fluidité de la composition. Des teneurs en glycérine de l'ordre de 5 à 10 % en poids peuvent convenir.

En suite de quoi, on dispose désormais, pour la dispersion des hydrocolloides comme notamment la cellulose et ses dérivés, d'un moyen général, nouveau et inventif, constitué par des compositions de polyols concentrées et sélectionnées, telles que décrites précédemment.

Ces compositions peuvent ainsi être utilisées aisément dans la préparation de pâtes dentifrices, et dans de nombreuses préparations pharmaceutiques ou cosmétiques telles que des sirops, des gels, des crèmes, des bains de bouche. Elles peuvent également être utilisées dans diverses industries chimiques ou agrochimiques.

Les compositions conformes à l'invention ont d'autres avantages dans le domaine industriel qui sont la diminution des coûts de transport par diminution de la quantité d'eau à transporter, de diminution des volumes à stocker, ainsi que la diminution des risques de contamination microbienne.

Le temps de mise en oeuvre est également diminué en raison de l'optimisation des opérations de débullage liée à une plus faible présence d'eau, ainsi que par l'amélioration du temps de dispersion des hydrocolloïdes à moindre viscosité.

L'invention sera encore mieux comprise à l'aide des exemples qui suivent, lesquels ne se veulent pas limitatifs et font seulement état de certains modes de réalisations et de certaines propriétés avantageuses des compositions conformes à l'invention.

## EXEMPLE 1 :

### Test de dispersion d'un agent gélifiant.

On prépare une composition de polyols dont le profil glucidique est le suivant :

- monosaccharides hydrogénés = 41,3 % / sec dont sorbitol = 38 ,8 %
- disaccharides hydrogénés = 32 % / sec

La matière sèche de cette composition est de 74,2 % en poids. Cette composition est concentrée à différentes matières sèches : 82%, 85%, 86.7%, 91%, 92%.

Dans un bol inox à double enveloppe, chauffé à 45°C par un bain à circulation, on verse 200 g de la composition de polyols à tester, provenant d'une étuve à 45°C.

Sous agitation à 200 rpm, on ajoute 8 g de CMC, commercialisée sous le nom de marque BLANOSE® 7MXF par la société HERCULES. On laisse en agitation pendant 20 minutes.

On ajoute 200 g d'eau et on agite à nouveau 20 minutes à 200 rpm.

On observe la texture du mélange.

| Résultats : | |
| --- | --- |
| Teneur en eau des compositions | Observations |
| 25,8 % | Présence de grumeaux |
| 18 % | Présence de grumeaux |
| 15 % | Bonne dispersion. Pas de grumeaux. Obtention d'un gel homogène après 40 mn d'agitation. |
| 13,3 % | Bonne dispersion. Pas de grumeaux. Obtention d'un gel homogène après 40 mn d'agitation. |
| 9 % | Prise en masse rapide après ajout de la CMC |

Par analogie avec la glycérine, on pouvait supposer que la diminution de la teneur en eau des compositions faciliterait la dispersion de la CMC et que les produits les plus anhydres seraient les meilleurs. Or, il n'en est rien puisqu'un second phénomène apparaît de façon inattendue, à savoir que pour les teneurs en eau inférieures à 10 %, on observe bien dans un premier temps une dispersion correcte de la CMC, suivie quasi instantanément par une prise en masse de la solution.

Il convient donc de concentrer les sirops de polyols à des teneurs choisies entre 10 et 17 % d'eau, pour assurer une bonne dispersibilité de l'hydrocolloïde.

## EXEMPLE 2

### Stabilité et viscosité d'une composition selon l'invention

Une composition de polyols dont la matière sèche de départ est de 70 % a été concentrée à différentes matières sèches. Le profil glucidique de la composition est le suivant : Sorbitol : 83% (Pourcentages exprimés en poids / poids sec)

| Mannitol | 1,2 % |
|----------|-------|
| Maltitol | 4,2 % |

Sur chaque composition obtenue ont été réalisées :

- une étude de la stabilité à 45°C pendant 1 mois
- une mesure de viscosité à 45°C ;

L'étude de stabilité consiste à vérifier la cristallisation ou non des compositions, stockées à 45°C pendant 1 mois. Les viscosités des différentes compositions ont été mesurées à l'aide d'un rhéomètre de type ARES, commercialisé par la Société RHEOMETRIC SCIENTIFIC (US).

On obtient les résultats suivants :

| Teneur en eau (% en poids) | Viscosité à 45°C (mPa.s) | Stabilité à 45°C sur 1 mois |
|----------------------------|--------------------------|------------------------------|
| 30 | 45 | pas de cristallisation |
| 19 | 395 | pas de cristallisation |
| 18 | 490 | pas de cristallisation |
| 14,5 | 980 | pas de cristallisation |
| 10 | 392 | CRISTALLISE après 15 jours |

Pour toutes les compositions, les viscosités à 45°C sont relativement faibles : à toutes les matières sèches testées, les produits sont pompables (viscosité inférieure à 10.000 mPa.s).

Les compositions sont stables 1 mois à 45°C, pour les teneurs en eau supérieures à 10 %. Celles-ci ont une teneur élevée en sorbitol (82,4 % en poids / poids sec) qui favorise la cristallisation : c'est donc une teneur défavorable au test. Pour augmenter la stabilité à des teneurs en eau plus faibles, il a été envisagé d'augmenter significativement la teneur en disaccharides hydrogénés.

A titre comparatif, on mesure la viscosité à différentes températures d'un sirop riche en maltitol non cristallisable commercialisé par la Demanderesse sous le nom de marque LYCASIN® 80/55, concentré à 85 % de matière sèche, dont le profil glucidique est le suivant :

- monosaccharides hydrogénés : 8 % / sec
- disaccharides hydrogénés : 55 % / sec
- oligo et polysaccharides : 37 % / sec

| Température | Viscosité (mPa.s) |
|------------|-------------------|
| 30°C | 250 000 |
| 40°C | 70 000 |
| 50°C | 23 000 |
| 60°C | 8 000 |

Ces données démontrent que les sirops riches en maltitol ne sont pas pompables lorsqu'ils sont concentrés à une matière sèche élevée, sauf à les chauffer à 60°C ou plus.

**EXEMPLE 3 :**

On prépare une composition conforme à l'invention en concentrant à 14,5 % d'eau un sirop de sorbitol présentant le même spectre glucidique que celui de l'exemple 2, initialement à 30 % d'eau.

On mesure la viscosité, la stabilité de la composition et la dispersibilité de la CMC dans la composition à 45°C, selon les techniques décrites précédemment.

Viscosité de la composition : 980 mPa.s

Stabilité à 45°C sur 1 mois : pas de cristallisation

Dispersion de la CMC : Pas de grumeaux. Epaississement important après ajout de la CMC.

La composition selon l'invention, ici testée qui comprend 84,2 % en poids / sec de monosaccharides hydrogénés, 4,2 % en poids / sec de disaccharides hydrogénés, et 14,5 % en poids d'eau est donc à la fois stable, pompable et permet une dispersion de la CMC ce que ne permettait ni :

- un sirop de sorbitol de l'art antérieur, non concentré,
- un sirop de sorbitol de même spectre glucidique, mais concentré à une teneur en eau supérieure à 17 % ou inférieure à 10 %,
- un sirop de polyols de teneur en eau comprise entre 10 et 17 %, mais de profil glucidique différent, à savoir, contenant plus de 35 % de disaccharides hydrogénés et/ou moins de 30 % de sorbitol.

Seules les compositions spécifiquement sélectionnées par la Demanderesse répondent totalement à l'ensemble des exigences de la pratique industrielle.

De plus, elles peuvent être livrées à 45°C et utilisées directement à une température par les fabricants de produits pharmaceutiques ou cosmétiques intéressés par cette utilisation à chaud des compositions.

## EXEMPLE 4 : préparation de pâtes dentifrices

On prépare une pâte dentifrice A à base d'un sirop de sorbitol conforme à l'invention, à 85% de matière sèche, que l'on compare à une pâte dentifrice B préparée avec un sirop de sorbitol de l'art antérieur.

| Formule : | A | B |
|---|---|---|
| Sirop de sorbitol à 70%MS | | 64% |
| Sirop de sorbitol à 85.8%MS | 52.2% | |
| Silice abrasive Tixosil 73 | 14% | 14% |
| Silice épaississante Tixosil 43 | 9% | 9% |
| Texapon à 30%MS | 4.16% | 4.16% |
| CMC : Blanose 7MXF | 0.7% | 0.7% |
| Saccharinate de sodium | 0.2% | 0.2% |
| Monofluorophosphate de sodium | 0.76% | 0.76% |
| Arôme menthe Silésia | 0.8% | 0.8% |
| Colorant vert (solution à 1%) | 1% | 1% |
| Méthyl paraben | 0.18% | 0.18% |
| Propyl paraben | 0.02% | 0.02% |
| Eau | 16.98% | 5.18% |

Protocole :

Pâte A : on chauffe l'eau à 65°C dans un bécher, et on solubilise les parabens. On refroidit à 50°C puis on solubilise le saccharinate et le monofluorophosphate. On obtient une solution A1.

Dans un mélangeur sous vide, équipé d'une simple pale en fond de cuve, de marque GUEDU, type 4.5NO, (commercialisé par la société GUEDU 21140 SEMUR en AUXOIS),on introduit le sirop de sorbitol selon l'invention sous agitation à 470 rpm. On incorpore la CMC et on mélange pendant 5 minutes. On obtient une solution A2.

On introduit alors la solution A1 dans A2, on mélange pendant 5 minutes, puis on laisse reposer 30 minutes en laissant refroidir le mélangeur.

On ajoute ensuite le colorant et l'arôme, on mélange 5 minutes sous vide.

On ajoute la moitié des silices, on mélange 10 minutes sous vide.

On ajoute la seconde moitié des silices, on mélange 10 minutes sous vide.

On ajoute enfin le Texapon, puis on mélange 2 minutes 30 secondes sous vide.

Pâte B : On chauffe l'eau à 50°C dans un bécher et on solubilise les saccharinate et monofluorophosphate, on obtient une solution 81.

On chauffe le sirop de sorbitol selon l'art antérieur à 80°C et on solubilise les parabens.

On refroidit la solution à 50°C et on ajoute très lentement la CHC sous très forte agitation, dans un homogénéiseur Polytron commercialisé par la société Suisse KINEMATICA) réglé à 12000rpm. On obtient une solution B2.

On ajoute la solution B1 à B2, on mélange pendant 5 minutes, puis on introduit cette solution dans un mélangeur GUEDU, et on laisse reposer 30 minutes.

Le protocole d'ajout de l'arôme et des silices est ensuite le même que pour la pâte A.

Résultats : La pâte réalisée avec la composition selon l'invention est tout à fait satisfaisante. Elle semble plus brillante que celle réalisée avec le sirop standard.

La viscosité Hélipath après fabrication est de 460000 cps à 40°C.

La viscosité Hélipath 24 heures après fabrication est de 450000 cps à 20°C.

L'indice de réfraction est similaire pour les deux pâtes :

$$A = 1.4462$$

$$B = 1.4457$$

Il faut noter, de plus, que l'utilisation de la composition selon l'invention permet de disposer avantageusement d'une plus grande quantité d'eau libre pour la dissolution des actifs.

De la même manière, on prépare une pâte dentifrice dans laquelle la formule ne diffère que par les silices qui sont remplacées par du carbonate de calcium.

Le sirop de sorbitol de l'art antérieur est un sirop de sorbitol stable aux agents alcalins, commercialisé par la Demanderesse sous la marque NEOSORB® 70/70SB. Ce sirop est concentré à 85.8% de matière sèche conformément à l'invention.

La formule de la pâte est la suivante :

|  | A | B |
|---|---|---|
|  |  |  |
| NEOSORB® 70/70 SB à 70%MS | 35.7% |  |
| NEOSORB® 70/70 SB à 85.8% MS |  | 29.10% |
| Carbonate de calcium | 45% | 45% |
| Texapon à 30%MS | 5.66% | 5.66% |
| Blanose 7MXF | 1.15% | 1.15% |
| Saccharinate de sodium | 0.2% | 0.2% |
| Monofluorophosphate de sodium | 0.8% | 0.8% |
| Arôme menthe Silésia | 1% | 1% |
| Méthyl paraben | 0.18% | 0.18% |
| Propyl paraben | 0.02% | 0.02% |
| Eau | 16.89% | 10.29% |

Le protocole est identique à celui des pâtes précédentes.

Les résultats sont également très satisfaisants. La viscosité Hélipath de la pâte selon l'invention après fabrication est de 340000 cps à 42°C, et de 600000 cps à 20°C après 12 heures de fabrication.

De la même manière, la quantité d'eau libre disponible augmente quand on utilise la composition selon l'invention.

### EXEMPLE 5 : étude de stabilité à 45°C.

On étudie la stabilité en matière de couleur, de composition, d'une composition conforme à l'invention, stockée à 45°C.

A cet effet, on prépare un sirop de sorbitol stable à la chaleur et aux alcalis, commercialisé par la demanderesse sous la marque NEOSORB®70/70 SB, que l'on amène à 85% de matière sèche sur finisseur.

Ce sirop est stocké durant 4 mois dans un containeur chauffant, à une température d'environ 45°C.

Lors de ce stockage, aucune évolution n'a été observée visuellement : pas d'apparition de cristaux, pas de coloration jaunâtre.

Des échantillons de ce sirop ont été prélevés à 15 jours, 1 mois, 2 mois et 4 mois de stockage pour analyse comparative.

Les résultats sont les suivants :

| Durée de stockage | 0 | 15 jours | 1 mois | 2 mois | 4 mois |
|---|---|---|---|---|---|
| **Indice de réfraction** | 1.4940 | 1.4946 | 1.4944 | 1.4946 | 1.4940 |
| **Matière sèche** | 85.4% | 85.5% | 85.5% | 85.7% | 85.3% |
| **Sucres réducteurs (ppm/sec)** | 180 ppm | 250 ppm | 150 ppm | 210 ppm | 180 ppm |
| **PH** | 6.0 | 5.6 | 5.7 | 6.0 | 5.4 |
| **Coloration Icumsa** | 5 | | 5 | | 5 |

La composition selon l'invention n'a pas évolué pendant les 4 mois de stockage à 45°C, elle apparaît très stable à cette température.

Il est donc parfaitement envisageable de stocker et de livrer cette composition à cette température.

**Revendications**

1. Composition de polyols concentrée, **caractérisée par le fait que** sa teneur en eau est comprise entre 12 et 16 %, et en ce qu'elle comprend :

   - de 35 à 90 % de monosaccharides hydrogénés dont au moins 30 % de sorbitol
   - de 0 à 45 % de disaccharides hydrogénés, ces pourcentages étant exprimés en poids sec par rapport au poids sec de l'ensemble des saccharides hydrogénés contenus dans la dite composition.

2. Composition selon la revendication 1
   **caractérisée en ce que** sa teneur en monosaccharides hydrogénés est comprise entre 40 et 90 %, dont au moins 35% de sorbitol, et sa teneur en disaccharides hydrogénés est comprise entre 0 et 35 %.

3. Composition selon la revendication 1
   **caractérisée en ce que** sa teneur en monosaccharides hydrogénés est comprise entre 60 et 90%, dont au moins 50% de sorbitol, et sa teneur en disaccharides hydrogénés est comprise entre 2 et 35%.

4. Composition selon l'une quelconque des revendications 1 à 3 **caractérisée en ce qu'**elle présente une teneur en sucres réducteurs inférieure à 500 ppm sur sec.

5. Composition selon l'une quelconque des revendications 1 à 4, **caractérisée en ce qu'**elle se présente à une température supérieure à 20°C, de préférence comprise entre 30 et 55°C.

6. Composition selon l'une quelconque des revendications 1 à 5, **caractérisée en ce qu'**elle comprend en outre 10 à 19 % en poids de polysaccharides hydrogénés de degré de polymérisation supérieur ou égal à 3.

7. Composition selon l'une quelconque des revendications 1 à 6, **caractérisée en ce qu'**elle comprend en outre de la glycérine, en quantité inférieure ou égale à 24 % en poids par rapport au poids de ladite composition.

8. Utilisation d'une composition selon l'une quelconque des revendications 1 à 7, comme milieu de dispersion des hydrocolloïdes et notamment de la cellulose et de ses dérivés.

9. Utilisation d'une composition selon l'une quelconque des revendications 1 à 7 pour la préparation de produits pharmaceutiques ou cosmétologiques.

10. Utilisation d'une composition selon l'une ou l'autre des revendications 1 à 7 pour la préparation d'une pâte dentifrice.

**Claims**

1. Concentrated polyol composition, **characterized in that** its water content is from 12 to 16%, and **in that** it comprises :

- from 35 to 90% of hydrogenated monosaccharides including at least 30% of sorbitol,
- from 0 to 45% of hydrogenated disaccharides, these percentages being expressed as dry weight relative to the dry weight of all of the hydrogenated saccharides contained in the said composition.

2. Composition according to Claim 1, **characterized in that** its content of hydrogenated monosaccharides is between 40 and 90%, including at least 35% of sorbitol, and its content of hydrogenated disaccharides is between 0 and 35%.

3. Composition according to Claim 1, **characterized in that** its content of hydrogenated monosaccharides is between 60 and 90%, including at least 50% of sorbitol, and, its content of hydrogenated disaccharides is between 2 and 35%.

4. Composition according to anyone of claims 1 to 3, **characterized in that** it has a reducing-sugar content of less than 500 ppm of solids.

5. Composition according to anyone of claims 1 to 4, **characterized in that** it has a temperature above 20°C, preferably between 30 and 55°C.

6. Composition according to anyone of claims 1 to 5, **characterized in that** it comprises also 10 to 19% by weight of hydrogenated polysaccharides with a degree of polymerization of greater than or equal to 3.

7. Composition according to anyone of claims 1 to 6, **characterized in that** it comprises also glycerol in an amount of less than or equal to 24% by weight relative to the weight of the said composition.

8. Use of a composition according to anyone of claims 1 to 7, as a dispersing medium of hydrocolloids, and in particular cellulose and its derivatives.

9. Use of a composition according to anyone of claims 1 to 7, for the manufacture of pharmaceutical or cosmetological products.

10. Use of a composition according to anyone of claims 1 to 7 for the manufacture of toothpaste.


**Patentansprüche**

1. Konzentrierte Zusammensetzung von Polyolen, **dadurch gekennzeichnet, dass** ihr Wassergehalt zwischen 12 und 16 % liegt, und dass sie umfasst:

   - 35 bis 90 % hydrierte Monosaccharide, davon mindestens 30 % Sorbitol,
   - 0 bis 45 % hydrierte Disaccharide, wobei diese Prozentangaben als Trockengewicht, bezogen auf das Trokkengewicht der gesamten in der Zusammensetzung enthaltenen hydrierten Saccharide ausgedrückt sind.

2. Zusammensetzung nach Anspruch 1, **dadurch gekennzeichnet, dass** ihr Gehalt an hydrierten Monosacchariden zwischen 40 und 90 % liegt, davon mindestens 35 % Sorbitol, und dass ihr Gehalt an hydrierten Disacchariden zwischen 0 und 35 % liegt.

3. Zusammensetzung nach Anspruch 1, **dadurch gekennzeichnet, dass** ihr Gehalt an hydrierten Monosacchariden zwischen 60 und 90 % liegt, davon mindestens 50 % Sorbitol, und dass ihr Gehalt an hydrierten Disacchariden zwischen 2 und 35 % liegt.

4. Zusammensetzung nach einem der Ansprüche 1 bis 3, **dadurch gekennzeichnet, dass** sie einen Gehalt an reduzierenden Zuckern von weniger als 500 ppm, bezogen auf Trockengewicht, aufweist.

5. Zusammensetzung nach einem der Ansprüche 1 bis 4, **dadurch gekennzeichnet, dass** sie eine Temperatur von mehr als 20°C, bevorzugt zwischen 30 und 55°C aufweist.

6. Zusammensetzung nach einem der Ansprüche 1 bis 5, **dadurch gekennzeichnet, dass** sie weiterhin 10 bis 19 Gew.-% hydrierte Polysaccharide mit einem Polymerisationsgrad von größer oder gleich 3 umfasst.

7. Zusammensetzung nach einem der Ansprüche 1 bis 6, **dadurch gekennzeichnet, dass** sie weiterhin Glyzerin in einer Menge von kleiner oder gleich 24 Gew.-%, bezogen auf das Gewicht der Zusammensetzung, umfasst.

8. Verwendung einer Zusammensetzung nach einem der Ansprüche 1 bis 7 als Medium zur Dispergierung von Hydrokolloiden, und insbesondere von Cellulose und deren Derivaten.

9. Verwendung einer Zusammensetzung nach einem der Ansprüche 1 bis 7 zur Herstellung von pharmazeutischen oder kosmetischen Produkten.

10. Verwendung einer Zusammensetzung nach einem der Ansprüche 1 bis 7 zur Herstellung einer Zahnpaste.

**EP 1 004 354 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9748372 A
- US 4883537 A
- US 3651936 A
- US 4728515 A
- US 4671961 A
- US 4671967 A
- WO 9504107 A
- AU 642177
- EP 0072080 A
- US 5728225 A